# DEMANDE DE BREVET EUROPEEN

(11) **EP 3 456 694 A1**
(43) Date de publication de la demande: **20.03.2019**
(21) Numéro de dépôt: 18290099.3
(22) Date de dépôt: 13.09.2018
(51) Int. Cl.: C03C 23/00, C03C 17/36, G02C 7/10

(54) **NOUVEAU PROCÉDÉ DE MIROITAGE PARTIEL DE VERRES DE LUNETTES, ET VERRES OBTENUS GRÂCE AUDIT PROCÉDÉ**

(30) Priorité: 14.09.2017 FR 1700922
(71) Demandeur: Dalloz Creations, 39200 Saint-Claude (FR)
(72) Inventeur: Cornet, Bruno, 01100 Oyonnax (FR)
(74) Mandataire: Gallochat, Alain

(57) **Abrégé**

Nouveau procédé de miroitage partiel de verres de lunettes, et verres obtenus grâce audit procédé.

Ce procédé, appliqué à des verres de lunettes (1) comportant un substrat verni (2) sur lequel une ou plusieurs couches minces (3), (4), (5) sont disposées, utilise un laser à commande numérique, ledit laser émettant au travers d'une fibre solide, la longueur d'onde utilisée étant dans le proche infrarouge. Lorsque ces verres comportent trois couches minces (3), (4), (5), il est possible en utilisant le procédé selon l'invention d'aboutir à un miroitage partiel dans lequel le laser a éliminé :
- les couches minces (3), (4) (5) sur une première partie de celles-ci, jusqu'à atteindre le substrat verni (2),
- puis les couches minces (4) et (5), sur une partie de celles-ci, laissant apparaître une partie de la couche mince (3),
- et enfin la couche mince (5), sur une partie de celle-ci, laissant apparaître une partie de la couche mince (4).

Application aux verres solaires où chaque couche mince est constituée de matériaux évaporables, présentant globalement un effet réfléchissant et couramment utilisés dans les traitements sous vide de verres solaires.

## Description

La présente invention concerne un nouveau procédé de miroitage partiel de verres de lunettes, ainsi que les verres obtenus grâce audit procédé.

Il existe dans le commerce des verres de lunettes, notamment solaires, présentant une surface réfléchissante, cette caractéristique conférant auxdits verres un effet miroir. Cet effet, dénommé dans la suite de la présente description « miroitage » est obtenu notamment en déposant sur lesdits verres des couches minces réalisées par un empilage d'un ou plusieurs différents matériaux.

Le miroitage est obtenu sur des verres solaires selon plusieurs procédés, dont :
- un miroitage simple obtenu par l'évaporation d'un matériau réfléchissant,
- un miroitage complexe obtenu par l'empilage de matériaux, qui, dans leur assemblage, donneront un effet réfléchissant.

Il est paru intéressant de chercher à obtenir un miroitage partiel, c'est-à-dire faisant apparaître des zones ou dessins où la surface réfléchissante n'existe pas, constituant ainsi un gravage desdits verres.

Plusieurs procédés ont été conçus permettant d'aboutir à un tel miroitage partiel.

Un procédé dénommé « tampographie » consistant en un système d'impression permettant de marquer tout type de support, présente un certain nombre d'inconvénients et notamment un manque de précision, une difficulté dans la finesse des traits, un manque de flexibilité dans la mise en oeuvre, une taille d'impression limitée dans la mesure où le tampon peut sortir de la zone de marquage, une cadence limitée et un manque de répétabilité.

Un autre procédé consiste à utiliser des caches ou masques lors de la dépose de la ou des couches minces sur les verres ; un tel procédé, outre les inconvénients relevés dans le cas de la tampographie, présente l'inconvénient d'une restriction dans les modèles de marquage, dans la mesure où les caches ou masques correspondent à un seul type de design..

Un autre procédé fait appel à un laser au CO₂ qui va détruire certaines zones de la couche réfléchissante de façon à faire apparaître un dessin par absence d'effet réfléchissant dans lesdites zones. Un tel procédé va attaquer le verre sous forme d'éclats : cette attaque manque de contrôle et peut également aboutir à des microfissures.

Le procédé selon l'invention évite les inconvénients précités, tout en ayant des avantages spécifiques qui seront cités plus avant dans la présente description.

De façon plus précise, le procédé selon l'invention permettant le miroitage partiel, ou gravage, de verres de lunettes, notamment solaires, comportant un substrat verni sur lequel une ou plusieurs couches minces sont disposées, où chaque couche mince est constituée de matériaux évaporables, présentant globalement un effet réfléchissant, et couramment utilisés dans les traitements sous vide de verres solaires, consiste à utiliser un laser à commande numérique, ledit laser émettant au travers d'une fibre solide, la longueur d'onde utilisée étant dans le proche infrarouge.

Selon un mode préférentiel de réalisation, le faisceau laser est émis au travers d'une fibre solide.

Selon une variante d'exécution, la longueur d'onde utilisée se situe entre 1 000 et 1 100 nm.

D'autres avantages et caractéristiques ressortiront mieux de la description qui va suivre faite en regard des figures données à titre indicatif et nullement limitatif parmi lesquelles :
- la Figure 1 est une vue en coupe d'un verre muni de plusieurs couches minces de matériaux,
- la Figure 2 correspond au verre illustré à la Figure 1, après traitement au laser, et
- la Figure 3 représente une vue de face du verre de la Figure 2.

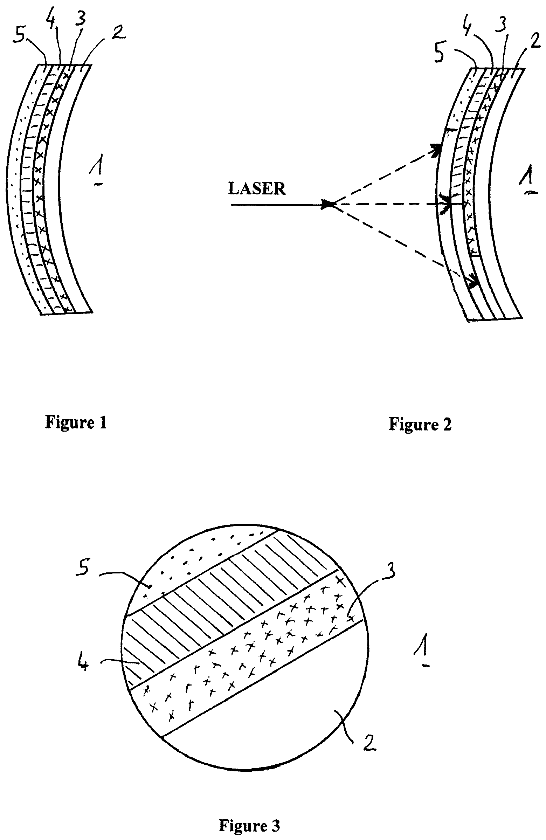

Selon la Figure 1, le verre de lunette globalement référencé (1) se compose schématiquement d'un substrat verni (2) sur lequel ont été déposées trois couches minces (3), (4) (5) ; chaque couche mince est constituée de matériaux évaporables et couramment utilisés dans les traitements sous vide de verres solaires, l'ensemble présentant globalement un effet réfléchissant. A titre d'exemple non limitatif, l'effet réfléchissant est obtenu grâce à une couche mince réalisée en un matériau réfléchissant, par exemple un métal réfléchissant, ce dernier pouvant être du chrome ou un métal précieux, tel que l'or ou le platine.

Avant le traitement au laser, les couches minces (3), (4) (5) recouvrent l'intégralité du substrat verni (2).

Le laser utilisé dans la présente invention est commandé numériquement et non plus manuellement, ce qui occasionne moins de défauts sur la pièce finale ; en outre, cette commande étant numérique, la programmation des dessins, ou motifs, à graver sur le verre de lunettes est rapide et flexible.

La Figure 2 montre que, dans le miroitage partiel choisi, le laser a éliminé :
- les couches minces (3), (4) (5) sur une première partie de celles-ci, jusqu'à atteindre le substrat verni (2),
- puis les couches minces (4) et (5), sur une partie de celles-ci, laissant apparaître une partie de la couche mince (3),
- et enfin la couche mince (5), sur une partie de celle-ci, laissant apparaître une partie de la couche mince (4).

La Figure 3 représente l'apparence du verre (1) après le traitement au laser comme précédemment décrit : on voit ainsi que le substrat verni (2) et les couches minces (3), (4) et (5) sont visibles du côté d'un observateur regardant les lunettes portées par l'utilisateur dont la vision n'est en rien gênée par ce traitement au laser.

Dans les Figures 1 à 3, le verre est représenté avec trois couches minces de matériaux ; il est bien entendu que le procédé selon l'invention s'applique également, quel que soit le nombre de couches minces.

Comme cela a été précédemment mentionné, le laser au CO₂ comporte divers inconvénients ; afin de pallier ces derniers, il est apparu que les meilleurs résultats en matière de miroitage partiel étaient obtenus en utilisant un laser filtré utilisant une source diode et émettant au travers d'une fibre solide, comme par exemple l'ytterbium ou tout autre métal constitué par une terre rare au sens de la classification périodique des éléments, susceptible de pouvoir servir de fibre transmettant le faisceau laser.

De préférence, la longueur d'onde centrale se situera dans le proche infrarouge ; plus préférentiellement, la longueur d'onde choisie sera de l'ordre de 1 000 à 1 100 nm, et plus particulièrement entre 1 050 et 1 070 nm. Par comparaison, le laser au CO₂ fonctionne avec une longueur d'onde de l'ordre de 10 000 nm.

Selon une variante d'exécution avantageuse du procédé selon l'invention, de bons résultats sont obtenus avec un faisceau laser dont le diamètre se situe entre 18 et 30 microns et est préférentiellement de l'ordre de 25 microns, permettant ainsi une grande précision. En outre, un gravage sera constitué d'une succession de points, individuellement non perceptibles à l'oeil nu, mais qui, combinés, donne une résultante nommée effet, motif ou dessin.

Les meilleurs résultats en matière de finesse et de précision dans le gravage des verres, notamment solaires, ont été obtenus en utilisant ces éléments tel que précédemment décrits - type de commande de laser, fibre de terre rare, longueur d'onde proche de l'infrarouge, diamètre du faisceau - en combinaison.

La précision et la finesse apportées sont en adéquation avec les couches minces que la Demanderesse utilise sur ses substrats vernis ; en effet, ce type de laser permet d'être sélectif dans l'épaisseur ou les épaisseurs gravée(s), et offre un panel large de possibilités en vis-à-vis des besoins de miroitage partiel, notamment sur des verres solaires.

Il est à noter que la mise en oeuvre du procédé selon l'invention limite substantiellement, voire évite les nuisances environnementales ; en effet, aucun produit chimique n'est déposé sur le verre à graver : il n'y a donc pas de rejet chimique lors de l'exécution de l'opération de gravage.

En outre, le procédé selon l'invention, de par sa souplesse, permet de changer rapidement de modèle à graver, la surface à graver n'est pas limitée, et la personnalisation individuelle est possible, permettant ainsi de réaliser de petites séries.

## Revendications

1. Procédé permettant le miroitage partiel, ou gravage, de verres de lunettes, notamment solaires, comportant un substrat verni (2) sur lequel une ou plusieurs couches minces (3), (4), (5) sont disposées, où chaque couche mince est constituée de matériaux évaporables, présentant globalement un effet réfléchissant et couramment utilisés dans les traitements sous vide de verres solaires, **caractérisé en ce qu'**il consiste à utiliser un laser à commande numérique, ledit laser émettant au travers d'une fibre solide réalisée en un métal appartenant aux terres rares selon la classification périodique des éléments, la longueur d'onde utilisée étant dans le proche infrarouge.

2. Procédé selon la revendication 1 **caractérisé en ce que** ledit métal appartenant aux terres rares est l'ytterbium.

3. Procédé selon la revendication 1 **caractérisé en ce que** ladite longueur d'onde se situe entre 1 000 et 1 100 nm.

4. Procédé selon la revendication 3 **caractérisé en ce que** ladite longueur d'onde se situe entre 1 050 et 1 070 nm.

5. Procédé selon la revendication 1 **caractérisé en ce que** le faisceau dudit laser a un diamètre se situant entre 18 et 30 microns.

6. Procédé selon la revendication 5 **caractérisé en ce que** ledit diamètre est de l'ordre de 25 microns.

7. Procédé selon la revendication 1 **caractérisé en ce que** ledit effet réfléchissant est obtenu grâce à une couche mince réalisée en un métal réfléchissant.

8. Procédé selon la revendication 7 **caractérisé en ce que** le ledit métal réfléchissant est le chrome ou un métal précieux tel que l'or ou le platine.

9. Verres de lunettes, notamment solaires, dont le miroitage partiel est obtenu par un procédé selon l'une quelconque des revendications 1 à 8.
